# EUROPÄISCHE PATENTSCHRIFT

(11) **EP 2 742 792 B1**
(45) Veröffentlichungstag und Bekanntmachung des Hinweises auf die Patenterteilung: **14.11.2018**
(21) Anmeldenummer: 13184545.5
(22) Anmeldetag: 16.09.2013
(51) Int. Cl.: A01D 75/18, A01D 75/20, A01D 43/08, A01D 41/12

(54) **Selbstfahrender Feldhäcksler**
Self-propelled chaff cutter
Ramasseuse-hacheuse automobile

(30) Priorität: 12.12.2012 DE 102012112156
(43) Veröffentlichungstag der Anmeldung: 18.06.2014
(73) Patentinhaber: CLAAS Selbstfahrende Erntemaschinen GmbH, 33428 Harsewinkel (DE)
(72) Erfinder: Isfort, Heinrich, 48249 Dülmen (DE)

(56) Entgegenhaltungen:
- EP-A1- 1 716 741
- DE-A1- 4 215 696
- DE-A1- 19 742 846
- DE-A1-102008 040 902
- DE-B4- 10 063 555
- US-A1- 2002 073 670

## Beschreibung

Die Erfindung betrifft einen selbstfahrenden Feldhäcksler mit einem Hauptrahmen, der beidseitig des Feldhäckslers in dessen Längsrichtung verlaufende Rahmenteile aufweist und ein Häckselaggregat mit diesem nachgeordneter Aufbereitungs- und Fördereinrichtung, im Wesentlichen bestehend aus einer Nachzerkleinerungseinrichtung, einem Auswurfbeschleuniger und einem mit einem Auswurfkrümmer verbundenen Turm, einen Wärmetauscher und eine Brennkraftmaschine aufnimmt, und mit seitlichen, sowohl einen die Brennkraftmaschine sowie den Wärmetauscher aufnehmenden Motorraum als auch einen teilweise die Aufbereitung- und Fördereinrichtung aufnehmenden Raum nach außen hin verschließenden Verkleidungselementen.
Ein selbstfahrender Feldhäcksler ist eine landwirtschaftliche Erntemaschine, mit der ein Halmgut oder Mais über einen Erntevorsatz aufgenommen, dann einer aus Vorpresswalzen, einem Häckselaggregat und Nachzerkleinerungseinrichtungen bestehenden Aufbereitungseinrichtung zugeführt und schließlich über einen Auswurfbeschleuniger und einen verschwenkbaren Auswurfkrümmer einem Sammelwagen zugeführt wird. Dabei dient eine am Ende des Auswurfkrümmers angeordnete verstellbare Klappe dazu, das aus diesem austretende Erntegut derart zu leiten, dass es auf den Sammelwagen gelangt und dass dieser vollständig befüllt wird.
Ein selbstfahrender Feldhäcksler der im Oberbegriff des Patentanspruchs 1 angegebenen Gattung ist aus der DE 197 42 846 A1 bekannt. Es handelt sich dabei um einen selbstfahrenden Feldhäcksler, bei dem das von einem Erntevorsatz geschnittene und aufgenommene Erntegut in eine Häckseleinrichtung und von dort zur Aufbereitung in eine Konditioniereinrichtung gelangt. Von dort aus wird das aufbereitete Erntegut einem Nachbeschleuniger zugeführt, welcher dieses aufbereitete Erntegut über einen Auswurfkrümmer in ein Transportfahrzeug fördert. An den Nachbeschleuniger schließt dabei ein Förderschacht an, der von einem Förderturm umschlossen ist, wobei der Förderturm, der Nachbeschleuniger und die Nachzerkleinerungseinrichtung in einem Bereich hinter einer Fahrerkabine sowie vor dem Wärmetauscher, der als Wartungsraum bezeichnet wird, angeordnet sind. Dabei sind der Motorraum und der Wartungsraum beidseitig nach außen hin durch vertikal verlaufende Verkleidungselemente verschlossen. Eines dieser Verkleidungselemente weist eine Klappe auf, die offenbar für Wartungsarbeiten geöffnet werden kann.

Weiterhin ist aus der DE 100 63 555 B4 eine Schutzvorrichtung für einen selbstfahrenden Feldhäcksler bekannt, die eine durch eine Schutzvorrichtung abdeckbare Service-Öffnung oberhalb von Einzugswalzen der Häckseleinrichtung aufweist. Die Schutzvorrichtung, die aus einem flexiblen Material bestehen soll, kann dabei mit einer Serviceklappe versehen sein.

Es ist Aufgabe der vorliegenden Erfindung, eine seitliche Verkleidung eines selbstfahrenden Feldhäckslers derart auszubilden, dass Wartungsarbeiten oder eventuell erforderliche Reparaturarbeiten vereinfacht werden.

Diese Aufgabe wird, ausgehend vom Oberbegriff des Patentanspruchs 1, in Verbindung mit dessen kennzeichnenden Merkmalen gelöst. Gemäß dem kennzeichnenden Teil des Patentanspruchs 1 soll zumindest eines der Verkleidungselemente, das sich von einem Heck des selbstfahrenden Feldhäckslers bis in einen an eine Fahrerkabine angrenzenden Bereich erstreckt, derart an einem mit dem Hauptrahmen verbundenen bügelartig ausgebildeten Tragelement geführt sein, dass das Verkleidungselement sowohl um eine an dessen oberen Rand vorgesehene horizontal verlaufende als auch an dessen einem Ende vorgesehene im Wesentlichen vertikal verlaufende Schwenkachse verschwenkbar ist.

Ein entsprechender Feldhäcksler ist in seinem Frontbereich mit einem Erntevorsatz in Form eines Schneiderwerktisches, eines Maisgebisses oder einer Pick-up verbunden. Weiterhin weist der Feldhäcksler Vorrichtungen zum Häckseln, zur Aufbereitung und zur Förderung des Erntegutes auf. Eine Fahrerkabine ist oberhalb des Erntevorsatzes bzw. der Vorrichtungen zum Häckseln und zur Aufbereitung des Erntegutes angeordnet. Dabei ziehen die Einzugswalzen das Erntegut in die Erntemaschine und verdichten diesen Erntegutstrom. Eine weitere Verdichtung des Erntegutstroms erfolgt durch sich an die Einzugswalzen anschließende Vorpresswalzen, die, wie die Einzugswalzen, paarweise angetrieben werden.

Der verdichtete Erntegutstrom gelangt sodann in eine mit Messern versehende Häckseltrommel, die mit feststehenden Gegenschneiden zusammenwirkt. Wenn an den vorgenannte Baueinheiten der Vorrichtung zur Aufbereitung und zum Häckseln des Erntegutes Wartungs- oder Reparaturarbeiten durchzuführen sind, so geschieht das von der Frontseite oder von einem hinter den Antriebsrädern des Feldhäckslers liegenden Bereich her.

In Richtung des Erntegutflusses schließt sich an die Häckseltrommel eine Nachzerkleinerungseinrichtung an, die auch als Corn-Cracker bezeichnet wird. Diese dient dazu, bei der Ernte von Silomais oder Mais für eine Biogasanlage die Maiskörner derart zu beschädigen, dass diese mit in den anschließenden Gärungsprozess einbezogen werden können. Schließlich fördert eine Auswurfbeschleunigertrommel, die Bestandteil der Fördereinrichtung ist, das zerkleinerte Erntegut in einen von einem Turm gebildeten Förderschacht. Von diesem geht ein verstellbarer Auswurfkrümmer aus. Sollen an den Baueinheiten Nachbereitungseinrichtung und/oder Auswurfbeschleunigertrommel oder an der Brennkraftmaschine Wartungs- oder Reparaturarbeiten durchgeführt werden bzw. sollen diese komplett ausgetauscht werden, so muss die damit beauftragte Person möglichst ungehindert auf die hinter der Fahrerkabine liegenden Baueinheiten zugtreifen können.

Da die im Bereich dieser Baueinheiten vorhandenen seitlichen Verkleidungselemente des selbstfahrenden Feldhäckslers erfindungsgemäß um eine am oberen Rand vorgesehene horizontal verlaufende Schwenkachse verschwenkbar sind, kann das entsprechende Verkleidungselement für kleinere Reparaturarbeiten sowie für Wartungsarbeiten durch Verschwenken nach oben in eine dafür ausreichende Öffnungsstellung bewegt und in dieser arretiert werden. Sind dagegen Reparatur- oder Austauscharbeiten erforderlich, so wird erfindungsgemäß das komplette Verkleidungselement um eine vertikal verlaufende Schwenkachse verschwenkt, so dass es diese Arbeiten nicht behindert.

Demgegenüber sind nach der gattungsbildenden Druckschrift DE 197 42 846 A1 ortsfest an den Rahmenteilen des Hauptrahmens angebrachte Verkleidungselemente vorgesehen, wobei nur über eine an einem der Verkleidungselemente vertikal angelenkte Klappe die Möglichkeit besteht, in einen zwischen dem Nachbeschleuniger und dem Wärmetauscher liegenden Wartungsraum zu greifen. Daher sind ungehinderte Reparatur-, Austausch- oder Watungsarbeiten an den hinter den Verkleidungselementen liegenden Baueinheiten nicht möglich. Die in der DE 100 63 555 B4 dargestellte Schutzvorrichtung befindet sich im Einzugsbereich des Feldhäckslers und weist eine Klappe auf, die nur in einer Ebene schwenkbar ist.

Gemäß einer weiteren Ausgestaltung der Erfindung ist vorgesehen, an einem heckseitigen Ende des Feldhäckslers an zumindest einem der Rahmenteile einen vertikal verlaufenden Pfosten vorzusehen, an dem ein erstes Schwenklager zum Verschwenken des zumindest einen Verkleidungselements um die vertikal verlaufende Schwenkachse vorgesehen sind. Dabei kann der Pfosten mittels eines Flansches an dem Rahmenteil befestigt sein. Wenn an beiden Längsseiten des selbstfahrenden Feldhäckslers erfindungsgemäß ausgebildete Verkleidungselemente einen Zugang zum Motorraum und zu dem die Aufbereitungs- und Fördereinrichtung aufnehmenden Raum ermöglichen sollen, sind entsprechende Pfosten an beiden hinteren Ecken des Feldhäckslers vorgesehen.

Außerdem sollen bei Verwendung von zwei Pfosten die Pfosten über einen quer verlaufenden Abschnitt derart miteinander verbunden sein, dass insgesamt ein brückenartig gestaltetes Element gebildet wird. In diesem Fall kann das brückenartig bzw. bügelartig ausgebildete Element auch an einer zwischen den beiden Rahmenteilen verlaufenden Rammschürze befestigt sein und eine Heckverkleidung aufnehmen.

Weiterhin ist nach der Erfindung vorgesehen, im Bereich der oberen Erstreckung des Wärmetauschers an diesem eine Verbindungsstrebe vorzusehen, wobei ein anderes Ende dieser Verbindungsstrebe mit dem Pfosten verbunden ist. Somit ist in Form der Verbindungsstrebe ein Bauteil vorgesehen, das für eine ausreichende Abstützung des Wärmetauschers sorgt, das aber auch für Reparatur- oder Austauscharbeiten mit geringem Aufwand entfernt werden kann.

Außerdem soll an dem ersten Schwenklager ein im Wesentlichen vertikal verlaufender Schenkel des bügelartigen Tragelements geführt sein, von welchem ein horizontal verlaufender Schenkel ausgeht, an dem das Verkleidungselement über zweite Schwenklager geführt ist, um die das Verkleidungselement gegenüber dem horizontal verlaufenden Schenkel verschwenkbar ist. Die beiden Schenkel verlaufen dabei zueinander vorzugsweise unter einem rechten Winkel. Der Winkel kann aber auch kleiner als 90° sein, damit das Verkleidungselement im aufgeschwenkten Zustand eine schräge Stellung aufweist. Zumindest der horizontal verlaufende Schenkel kann als Rohr ausgebildet sein, wobei das Verkleidungselement über mit Bohrungen versehene Laschen verschwenkbar auf diesem Rohr geführt ist. In ähnlicher Weise kann auch das zwischen dem jeweiligen Pfosten und dem vertikal verlaufenden Schenkel angeordnete Schwenklager ausgebildet sein. Auch dieser Schenkel ist dann durch ein Rohr gebildet, wobei das Rohr drehbar in vorzugsweise zwei am Pfosten vorgesehenen Aufnahme geführt ist. Insgesamt ergibt sich dadurch eine mit kostengünstigen Mitteln herstellbarer Dreh-Kipp-Führung des jeweiligen Verkleidungselements.
Weiterhin kann mit dem Verkleidungselement eine Gasdruckfeder lösbar verbunden sein. Diese Gasdruckfeder stützt das Verkleidungselement in seiner geöffneten Stellung gegenüber dem Rahmenteil ab. Soll das Verkleidungselement um seine vertikal verlaufenden Schwenklager aufgeschwenkt werden, so ist zuvor die Gasdruckfeder auszuhängen.
Schließlich soll zwischen einer den Motorraum nach oben abdeckenden Haube und einer Kabine des selbstfahrenden Feldhäckslers eine abnehmbare Dachstrebe angeordnet ist, die gemeinsam mit der Haube einen Anschlag für das Verkleidungselement in dessen oberen Randbereich bildet. Diese Dachstrebe kann an ihren Enden derart ausgebildet sein, dass diese Enden formschlüssig in Aufnahmeöffnungen an der Rückseite der Fahrerkabine und an Elementen, die vom Wärmetauscher ausgehen, eingreifen. Diese Dachstrebe lässt sich folglich mit geringem Aufwand entfernen, so dass sie Demontage- und Montagearbeiten am Turm und an der Nachzerkleinerungseinrichtung nicht mehr behindert.

Die Erfindung ist auf die angegeben Kombination der Merkmale des Patentanspruchs 1 und der abhängigen Patentansprüche beschränkt. Es ergeben sich darüber hinaus Möglichkeiten, einzelne Merkmale, soweit sie aus der nachfolgenden Beschreibung der Ausführungsbeispiele oder zumindest aus der Zeichnung hervorgehen, miteinander zu kombinieren. Die Bezugnahme der Patentansprüche auf die Zeichnung durch die Verwendung von Bezugszeichen soll den Schutzumfang der Patentansprüche nicht beschränken.

Vorteilhafte Ausgestaltungen der Erfindung werden nachfolgend unter Bezugnahme auf die Zeichnungen erläutert. Es zeigen:
- Fig. 1: eine Seitenansicht einer als selbstfahrender Feldhäcksler ausgebildeten Erntemaschine ohne Erntevorsatz mit einem geschlossenen Verkleidungselement,
- Fig. 2: eine perspektivische Ansicht des Feldhäckslers mit um eine horizontale Schwenkachse hoch geschwenktem Verkleidungselement,
- Fig. 3: eine perspektivische Ansicht des Feldhäckslers, in welcher das Verkleidungselement um eine vertikal verlaufende Schwenkachse verschwenkt ist,
- Fig. 4: eine vergrößerte Darstellung der in der Figur 3 dargestellten Stellung des Verkleidungselements,
- Fig. 5: eine weitere Teilansicht des Feldhäckslers im Bereich einer Dachstrebe und
- Fig. 6: eine schematische Darstellung eines selbstfahrenden Feldhäckslers mit einem Erntevorsatz sowie einem Teilschnitt im Bereich von Einrichtungen zum Häckseln, zur Aufbereitung und zur Förderung des Erntegutes.

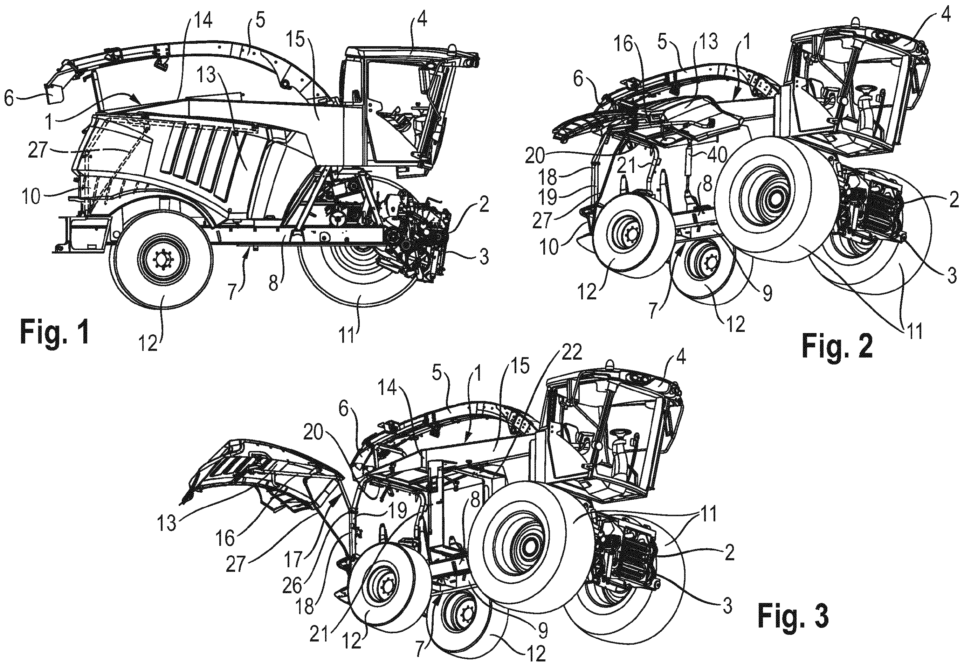

In der Figur 1 bis 3 ist mit 1 ein selbstfahrender Feldhäcksler bezeichnet, der in seinem frontseitigen Bereich zur Aufnahme eines Erntevorsatzes ausgebildet ist. Da dieser Erntevorsatz entfernt ist, sind Einzugswalzen 2 und 3 sichtbar, über die das vom Erntevorsatz aufgenommene Erntegut verdichtet und in das Innere der Maschine gefördert wird. Weiterhin weist der selbstfahrende Feldhäcksler 1 eine Fahrerkabine 4 und einen verschwenkbaren Auswurfkrümmer 5 auf. Die Verschwenkung des Auswurfkrümmers 5 erfolgt, um das Erntegut gezielt einem nicht näher dargestellten Sammelfahrzeug, das parallel aber versetzt zum Feldhäcksler 1 fährt, zuzuführen. Am Ende des Auswurfkrümmers 5 befindet sich eine Auswurfklappe 6, die um eine horizontale Achse verschwenkbar ist.

Der selbstfahrende Feldhäcksler weist weiterhin einen Hauptrahmen 7 mit beidseitig in Längsrichtung des Feldhäckslers 1 verlaufenden Rahmenteilen 8 und 9 auf, die im heckseitigen Bereich des Feldhäckslers 1 eine quer verlaufende Rammschürze 10 aufnehmen. Der Hauptrahmen 7 ist über nicht näher dargestellte Bauteile eines Fahrgestells auf angetriebenen Rädern 11 sowie nicht angetriebenen, lenkbaren Rädern 12 abgestützt. Außerdem weist der Feldhäcksler 1 beidseitig Verkleidungselemente auf, von denen in den Figuren 1 bis 3 nur das, in Fahrtrichtung gesehen, rechte Verkleidungselement 13 sichtbar ist.

In der Figur 1 befindet sich das Verkleidungselement 13 in seiner geschlossenen Stellung. Oberhalb des Verkleidungselements 13 verläuft zwischen der Fahrerkabine 4 und einem oberen Haube 14 eine Dachstrebe 15. Nach der Figur 2 wird das Verkleidungselement 13 um eine horizontal verlaufend Schwenkachse, die an einem horizontalen Schenkel 16 eines bügelartig ausgebildeten Tragelement 17 vorgesehen ist, aufgeklappt, um beispielsweise Servicearbeiten durchzuführen. Damit die erfindungsgemäße Aufhängung und Verstellung des Verkleidungselements 13 insgesamt sichtbar ist, sind die im Inneren des Feldhäckslers 1 für dessen Betrieb erforderlichen Baueinheiten, um deren Wartung, Reparatur oder Austausch es geht, nicht dargestellt.

Wie weiterhin aus der Figur 2 hervorgeht, soll der horizontal verlaufende Schenkel 16 in einen vertikal verlaufenden Schenkel 18 übergehen, der an einem ersten Pfosten 19 geführt ist. Dieser auf dem Rahmenteil 8 abgestützte Pfosten 19 steht über eine Querstrebe 20 mit einem am Rahmenteil 9 befestigten zweiten Pfosten 21 in Verbindung. Das Verkleidungselement 13 ist in seiner aufgeklappten Stellung gegenüber dem Rahmenteil 8 über eine Gasdruckfeder 40 abgestützt, also in dieser Stellung gehalten.

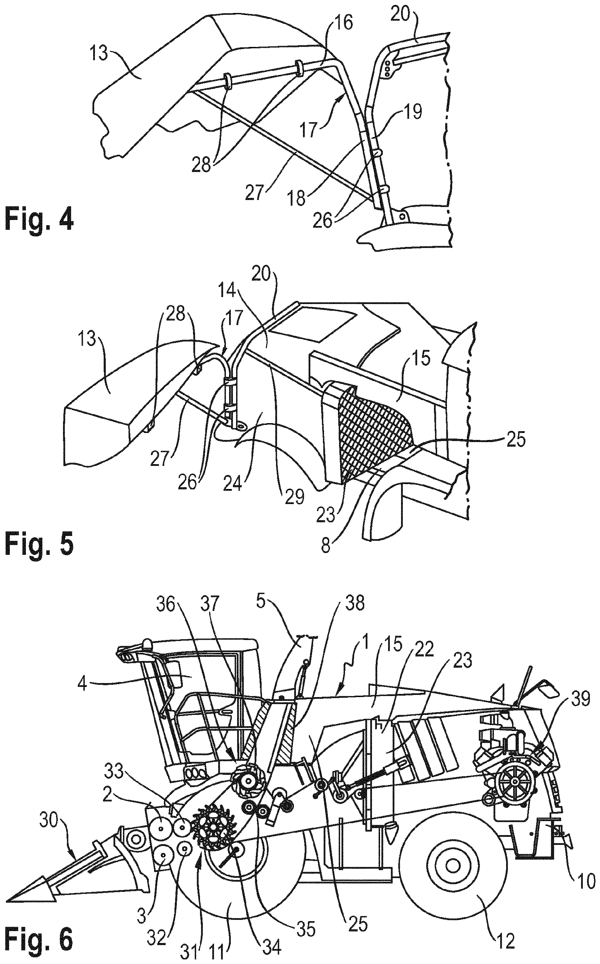

In den Figuren 3 bis 5 befindet sich das Verkleidungselement 13 in einer aufgeschwenkten Stellung, in welcher Reparaturarbeiten oder ein Austausch von im Inneren des Feldhäckslers angeordneten Aggregaten bzw. Baueinheiten vorgenommen werden können. Dabei ist in der Figur ein Rahmen 22 dargestellt, der zur Aufnahme eines in Figur 5 gezeigten Wärmetauschers 23 dient. Hinter diesem Rahmen 22 liegt ein Motorraum 24, während sich vor dem Rahmen 22 ein Raum 25 zur Aufnahme von Bauelementen einer Aufbereitungs- und Fördereinrichtung erstreckt. Ein Verschwenken des Verkleidungselements 13 in diese Stellung wird dadurch ermöglicht, dass zwischen dem Pfosten 19 und dem bügelartigen Tragelement 17 erste Schwenklager 26 vorgesehen sind. Wie aus den Figuren 3 bis 5 hervorgeht, ist der horizontal verlaufende Schenkel 18 gegenüber dem horizontal verlaufenden Schenkel 16 über ein Gestänge 27 verstrebt, damit das Verkleidungselement in seiner aufgeschwenkten Stellung ausreichend stabilisiert ist. Das Verkleidungselement 13 ist an dem horizontal verlaufenden Schenkel 16 über zweite Schwenklager 28 geführt. Außerdem geht aus der Figur 5 eine Verbindungsstrebe 29 hervor, die zwischen der Querstrebe 20 und dem den Wärmetauscher 23 aufnehmenden Rahmen 22 verläuft.

Zur weiteren Erläuterung der Anordnung der Aufbereitungs- und Fördereinrichtung innerhalb des in Figur 1 dargestellten selbstfahrenden Feldhäckslers 1 wird auf die Figur 6 verwiesen, in der ein entsprechender Feldhäcksler 1 schematisch und zum Teil im Schnitt dargestellt ist. In diesem Fall ist der Feldhäcksler 1 im Gegensatz zu der Figur 1 mit einem Erntevorsatz 30 in Form eines Schneiderwerktisches verbunden. Weiterhin weist der Feldhäcksler 1 eine Einrichtung 31 zur Aufbereitung und Förderung des Erntegutes sowie den Auswurfkrümmer 5 und die Fahrerkabine 4 auf. Die Fahrerkabine 4 ist oberhalb des Erntevorsatzes 30 bzw. zum Teil oberhalb der Einrichtung 31 zur Aufbereitung und Förderung des Erntegutes angeordnet.

Der Erntevorsatz 30 schneidet das Halmgut bodennah ab und leitet es den Einzugswalzen 2 und 3 zu, die paarweise angetrieben werden und zwischen denen das Erntegut hindurchgeführt wird. Dabei ziehen die Einzugswalzen 2 und 3 das Erntegut nicht nur in die Erntemaschine 1, sondern sie verdichten den Erntegutstrom auch. Eine weitere Verdichtung des Erntegutstroms erfolgt durch die sich daran anschließenden Vorpresswalzen 32 und 33, die ebenfalls paarweise angetrieben werden. Dabei kann die untere Vorpresswalze 32 mit einer glatten Oberfläche versehen sein und wirkt mit einem Abstreifer zusammen, der das an der glatten Oberfläche anhaftende Erntegut von dieser löst.

Der verdichtete Erntegutstrom gelangt sodann in eine mit Messern versehende Häckseltrommel 34, die mit feststehenden Gegenschneiden zusammenwirkt. Das gehäckselte Erntegut wird anschließend über nicht näher dargestellte seitliche Gutleitbleche und über einen Häckselboden einer Nachzerkleinerungseinrichtung 35 zugeführt. Diese Nachzerkleinerungseinrichtung 35, die auch als Corn-Cracker bezeichnet wird, dient dazu, bei der Ernte von Silomais oder Mais für eine Biogasanlage die Maiskörner derart zu beschädigen, dass diese mit in den anschließenden Gärungsprozess einbezogen werden können.

Unmittelbar hinter der Nachzerkleinerungseinrichtung 35 befindet sich als Teil einer Fördereinrichtung 36 ein Auswurfbeschleuniger 37, der das zerkleinerte Erntegut in einen in einem Turm 38 liegenden Förderschacht 39 transportiert, wobei sich an diesen Förderschacht 39 bzw. den Turm 38 der verstellbare Auswurfkrümmer 5 anschließt. Der Auswurfkrümmer 5 ist gegenüber dem Turm 38 verschwenkbar und weist, wie bereits im Zusammenhang mit der Figur 1 beschrieben, an seinem Ende die ebenfalls verstellbare Auswurfklappe 6 auf.

Die Nachzerkleinerungseinrichtung 35, der Auswurfbeschleuniger 37 und der Turm 38 befinden sich dabei in dem hinter der Fahrerkabine 4 liegenden Raum 25, so dass Reparatur- und Wartungsarbeiten nach einem Öffnen des Verkleidungselements 13 durchgeführt werden können. Für Wartungsarbeiten wird das Verkleidungselement 13 erfindungsgemäß nur um die zweiten horizontal verlaufenden Schwenklager 28 aufgeschwenkt. Sind dagegen Reparatur- und Austauscharbeiten erforderlich, so wird das Verkleidungselement 13 erfindungsgemäß um die ersten vertikal verlaufenden Schwenklager geschwenkt. Anschließend wird die Dachstrebe 15 entfernt, so dass die zu reparierende oder demontierenden Bauteile der Nachzerkleinerungseinrichtung 35, des Auswurfbeschleunigers und des Turms 38 frei zugänglich sind. Außerdem sind auch der Wärmetauscher 23 und eine den Feldhäcksler 1 antreibende Brennkraftmaschine 39 zugänglich.

### Bezugszeichenliste

- 1: selbstfahrender Feldhäcksler
- 2: obere Einzugswalze
- 3: untere Einzugswalze
- 4: Fahrerkabine
- 5: Auswurfkrümmer
- 6: Auswurfklappe
- 7: Hauptrahmen
- 8: Rahmenteil
- 9: Rahmenteil
- 10: Rammschürze
- 11: angetriebene Räder
- 12: lenkbare Räder
- 13: Verkleidungselement
- 14: Haube
- 15: Dachstrebe
- 16: Horizontal verlaufender Schenkel
- 17: bügelartiges Tragelement
- 18: vertikal verlaufender Schenkel
- 19: erster Pfosten
- 20: Querstrebe
- 21: zweiter Pfosten
- 22: Rahmen
- 23: Wärmetauscher
- 24: Motorraum
- 25: Raum
- 26: erstes vertikales Schwenklager
- 27: Gestänge
- 28: zweites horizontales Schwenklager
- 29: Verbindungsstrebe
- 30: Erntevorsatz
- 31: Einrichtung zur Aufbereitung und Förderung des Erntegutes
- 32: Vorpresswalze
- 33: Vorpresswalze
- 34: Häckseltrommel
- 35: Nachzerkleinerungseinrichtung
- 36: Fördereinrichtung
- 37: Auswurfbeschleuniger
- 38: Turm
- 39: Brennkraftmaschine
- 40: Gasdruckfeder

## Patentansprüche

1. Selbstfahrender Feldhäcksler (1) mit einem Hauptrahmen (7), der beidseitig des Feldhäckslers (1) in dessen Längsrichtung verlaufende Rahmenteile (9 und 10) aufweist und ein Häckselaggregat (34) mit diesem nachgeordneter Aufbereitungs- und Fördereinrichtung (31, 36), im Wesentlichen bestehend aus einer Nachzerkleinerungseinrichtung (35), einem Auswurfbeschleuniger (37) und einem mit einem Auswurfkrümmer (5) verbundenen Turm (38), einen Wärmetauscher (23) und eine Brennkraftmaschine (39) aufnimmt, und mit seitlichen, sowohl einen die Brennkraftmaschine (39) sowie den Wärmetauscher (23) aufnehmenden Motorraum (24) als auch einen teilweise die Aufbereitung- und Fördereinrichtung (31, 36) aufnehmenden Raum (25) nach außen hin verschließenden Verkleidungselementen (13), **dadurch gekennzeichnet, dass** zumindest eines der Verkleidungselemente (13), das sich von einem Heck des selbstfahrenden Feldhäckslers (1) bis in einen an eine Fahrerkabine (4) angrenzenden Bereich erstreckt, derart an einem mit dem Hauptrahmen (7) verbundenen bügelartig ausgebildeten Tragelement (17) geführt ist, dass das Verkleidungselement (13) sowohl um eine an dessen oberen Rand vorgesehene horizontal verlaufende als auch an dessen einem Ende vorgesehene im Wesentlichen vertikal verlaufende Schwenkachse verschwenkbar ist.

2. Selbstfahrender Feldhäcksler (1) nach Patentanspruch 1, **dadurch gekennzeichnet, dass** an einem heckseitigen Ende des Feldhäckslers (1) an zumindest einem der Rahmenteile (8, 9) ein vertikal verlaufender Pfosten (19) vorgesehen ist, an dem ein erstes Schwenklager (26) zum Verschwenken des zumindest einen Verkleidungselements (13) um die vertikal verlaufende Schwenkachse vorgesehen sind.

3. Selbstfahrender Feldhäcksler (1) nach Patentanspruch 1, **dadurch gekennzeichnet, dass** im Bereich der oberen Erstreckung des Wärmetauschers (23) an diesem eine Verbindungsstrebe (29) angreift, deren anderes Ende mit dem Pfosten (19) verbunden ist.

4. Selbstfahrender Feldhäcksler (1) nach Patentanspruch 2, **dadurch gekennzeichnet, dass** jedem der Rahmenteile (8 und 9) ein Pfosten (19 und 21) zugeordnet ist und dass die Pfosten (19 und 21) über eine Querstrebe (20) derart miteinander verbunden sind, dass insgesamt ein brückenartig gestaltetes Element gebildet wird.

5. Selbstfahrender Feldhäcksler (1) nach Patentanspruch 2, **dadurch gekennzeichnet, dass** an dem ersten Schwenklager (26) ein im Wesentlichen vertikal verlaufender Schenkel (18) des bügelartigen Tragelements (17) geführt ist, von welchem ein horizontal verlaufender Schenkel (16) ausgeht, an dem das Verkleidungselement (13) über zweite Schwenklager (28) geführt ist, wobei das Verkleidungselement (13) gegenüber dem horizontal verlaufenden Schenkel (16) verschwenkbar ist.

6. Selbstfahrender Feldhäcksler (1) nach Patentanspruch 5, **dadurch gekennzeichnet, dass** mit dem Verkleidungselement (13) eine Gasdruckfeder (40) lösbar verbunden ist.

7. Selbstfahrender Feldhäcksler (1) nach Patentanspruch 5, **dadurch gekennzeichnet, dass** zwischen einer den Motorraum (24) nach oben abdeckenden Haube (14) und einer Fahrerkabine (4) des selbstfahrenden Feldhäckslers (1) eine abnehmbare Dachstrebe (15) angeordnet ist, die gemeinsam mit der Haube (14) einen Anschlag für das Verkleidungselement (13) in dessen oberen Randbereich bildet.

## Claims

1. A self-propelled forage harvester (1) comprising a main frame (7) which on both sides of the forage harvester (1) has frame parts (9 and 10) extending in the longitudinal direction of the forage harvester and accommodates a chopping assembly (34) with arranged downstream thereof a preparation and conveyor device (31, 36), substantially comprising a post-comminuting device (35), a discharge accelerator (37) and a tower (38) connected to a discharge spout (5), a heat exchanger (23) and an internal combustion engine (39), and lateral casing elements (13) which close outwardly both an engine compartment (24) accommodating the internal combustion engine (39) and the heat exchanger (23) and also a compartment (25) partially accommodating the preparation and conveyor device (31, 36), **characterised in that** at least one of the casing elements (13) which extends from a tail of the self-propelled forage harvester (1) into a region adjoining a driving cab (4) is guided in such a away at a carrier element (17) which is of a bow-like configuration and which is connected to the main frame (7), that the casing element (13) is pivotable both about a horizontally extending pivot axis provided at the upper edge thereof and also a substantially vertically extending pivot axis provided at the one end thereof.

2. A self-propelled forage harvester (1) according to claim 1 **characterised in that** provided at a tail end of the forage harvester (1) at at least one of the frame parts (8, 9) is a vertically extending post (19) at which is provided a first pivot bearing (26) for pivotal movement of the at least one casing element (13) about the vertically extending pivot axis.

3. A self-propelled forage harvester (1) according to claim 1 **characterised in that** a connecting strut (29) engages the heat exchanger (23) in the region of the upper extent thereof, the other end of the connecting strut being connected to the post (19).

4. A self-propelled forage harvester (1) according to claim 2 **characterised in that** a post (19 and 21) is associated with each of the frame parts (8 and 9) and that the posts (19 and 21) are connected together by way of a transverse strut (20) in such a way that overall an element of a bridge-like configuration is formed.

5. A self-propelled forage harvester (1) according to claim 2 **characterised in that** a substantially vertically extending limb (18) of the bow-like carrier element (17) is guided at the first pivot bearing (26), from which limb extends a horizontally extending limb (16) at which the casing element (13) is guided by way of second pivot bearings (28), wherein the casing element (13) is pivotable relative to the horizontally extending limb (16).

6. A self-propelled forage harvester (1) according to claim 5 **characterised in that** a gas pressure spring (40) is releasably connected to the casing element (13).

7. A self-propelled forage harvester (1) according to claim 5 **characterised in that** arranged between a hood (14) which upwardly covers the engine compartment (24) and a driving cab (4) of the self-propelled forage harvester (1) is a removable roof strut (15) which jointly with the hood (14) forms an abutment for the casing element (13) in the upper edge region thereof.

## Revendications

1. Ramasseuse-hacheuse automotrice (1) comprenant un châssis principal (7) qui présente des éléments de châssis (9 et 10), s'étendant sur les deux côtés de la ramasseuse-hacheuse (1), dans le sens longitudinal de celle-ci, et accueille un groupe hacheur (34), avec un dispositif de traitement et de transport (31, 36), prévu à la suite de celui-ci et constitué essentiellement d'un dispositif de broyage complémentaire (35), d'un accélérateur d'éjection (37) et d'une tour (38) reliée à une goulotte d'éjection (5), un échangeur de chaleur (23) et un moteur à combustion interne (39), et comprenant des éléments d'habillage (13) latéraux fermant vis-à-vis de l'extérieur aussi bien un compartiment moteur (24), accueillant à la fois le moteur à combustion interne (39) et l'échangeur de chaleur (23), qu'un compartiment (25) accueillant en partie le dispositif de traitement et de transport (31, 36), **caractérisée en ce qu'**au moins un des éléments d'habillage (13), qui s'étend depuis l'arrière de la ramasseuse-hacheuse automotrice (1) jusque dans une zone adjacente à une cabine de conducteur (4), est guidé sur un élément support (17), réalisé à la manière d'un étrier et relié au châssis principal (7), de telle sorte que l'élément d'habillage (13) puisse être pivoté aussi bien autour d'un axe de pivotement horizontal, prévu sur son bord supérieur, qu'autour d'un axe de pivotement sensiblement vertical, prévu à une de ses extrémités.

2. Ramasseuse-hacheuse automotrice (1) selon la revendication 1, **caractérisée en ce qu'**il est prévu, à une extrémité côté arrière de la ramasseuse-hacheuse (1), sur au moins un des éléments de châssis (8, 9), un montant (19) qui s'étend de façon verticale et sur lequel est prévu un premier palier de pivotement (26) destiné au pivotement de l'élément d'habillage (13), au nombre d'au moins un, autour de l'axe de pivotement vertical.

3. Ramasseuse-hacheuse automotrice (1) selon la revendication 1, **caractérisée en ce que** dans la région de la partie supérieure de l'échangeur de chaleur (23), celui-ci est relié à une traverse de raccordement (29) dont l'autre extrémité est reliée au montant (19).

4. Ramasseuse-hacheuse automotrice (1) selon la revendication 2, **caractérisée en ce qu'**un montant (19 et 21) est associé à chacun des éléments de châssis (8 et 9) et **en ce que** les montants (19 et 21) sont reliés entre eux par une traverse (20) de manière à obtenir globalement un élément en forme de pont.

5. Ramasseuse-hacheuse automotrice (1) selon la revendication 2, **caractérisée en ce qu'**un bras (18), s'étendant de façon sensiblement verticale, de l'élément support (17) en forme d'étrier est guidé sur le premier palier de pivotement (26) et à partir duquel un bras (16) s'étend dans le sens horizontal, l'élément d'habillage (13) pouvant être pivoté par rapport au bras (16) horizontal.

6. Ramasseuse-hacheuse automotrice (1) selon la revendication 5, **caractérisée en ce qu'**un vérin à gaz (40) est relié de façon démontable à l'élément d'habillage (13).

7. Ramasseuse-hacheuse automotrice (1) selon la revendication 5, **caractérisée en ce qu'**il est prévu, entre un capot (14), recouvrant le compartiment moteur (24) vers le haut, et une cabine de conducteur (4) de la ramasseuse-hacheuse automotrice (1), une barre de toit (15) démontable qui forme, conjointement avec le capot (14), une butée pour l'élément d'habillage (13), dans la région de bord supérieure de celui-ci.
